# EUROPÄISCHE PATENTSCHRIFT

(11) **EP 3 036 673 B1**
(45) Veröffentlichungstag und Bekanntmachung des Hinweises auf die Patenterteilung: **28.11.2018**
(21) Anmeldenummer: 14752838.4
(22) Anmeldetag: 14.08.2014
(51) Int. Cl.: G06F 21/31, G06F 21/62, H04L 9/08, H04L 9/32

(54) **VERFAHREN ZUR DATENZUGRIFFSTEUERUNG**
METHOD FOR DATA ACCESS CONTROL
PROCÉDÉ DE COMMANDE D'ACCÈS À DES DONNÉES

(30) Priorität: 19.08.2013 DE 102013108941
(43) Veröffentlichungstag der Anmeldung: 29.06.2016
(73) Patentinhaber: Bundesdruckerei GmbH, 10969 Berlin (DE)
(72) Erfinder: SCHWAN, Matthias, 10437 Berlin (DE); WIRTH, Klaus Dieter, 12683 Berlin (DE)
(74) Vertreter: Patentship Patentanwaltsgesellschaft mbH
(86) Internationale Anmeldenummer: PCT/EP2014/067395
(87) Internationale Veröffentlichungsnummer: WO 2015/024850

(56) Entgegenhaltungen:
- "BSI -Technische Richtlinie - Stapelsignatur mit dem Heilberufsausweis", , 22. Oktober 2007 (2007-10-22), Seiten 1-37, XP055152506, Gefunden im Internet: URL:https://www.bsi.bund.de/SharedDocs/Dow nloads/DE/BSI/Publikationen/TechnischeRich tlinien/TR03114/BSI-TR-03114_pdf.pdf?__blo b=publicationFile [gefunden am 2014-11-12]
- Anonymous: "Password Authenticated Connection Establishment - Wikipedia", , 7. Mai 2013 (2013-05-07), XP055152504, Gefunden im Internet: URL:http://de.wikipedia.org/w/index.php?ti tle=Password_Authenticated_Connection_Esta blishment&oldid=118290356 [gefunden am 2014-11-12]
- "HBA_Spezifikation _Teil2_V2 1 0 Einführung der Gesundheitskarte Heilberufs-Ausweis und Security Module Card", , 28. Mai 2006 (2006-05-28), Seiten 1-144, XP055152508, Gefunden im Internet: URL:http://www.dkgev.de/pdf/1436.pdf [gefunden am 2014-11-12]
- "Advanced Security Mechanisms for Machine Readable Travel Documents - Part 2", , 20. März 2012 (2012-03-20), XP055152565, Gefunden im Internet: URL:https://www.bsi.bund.de/SharedDocs/Dow nloads/EN/BSI/Publications/TechGuidelines/ TR03110/TR-03110_v2.1_P2pdf.pdf?__blob=pub licationFile [gefunden am 2014-11-12]

## Beschreibung

Die vorliegende Erfindung betrifft ein Verfahren zur Datenzugriffsteuerung in einem Sicherheitsmodul, das einen Speicher mit ersten Daten und zweiten Daten umfasst.

Elektronische Sicherheitsmodule, wie sie in elektronischen Identitätsdokumenten oder Signaturerstellungseinheiten Verwendung finden, dienen im Allgemeinen dem sicheren Aufbewahren von Nutzerdaten, wie beispielsweise Identifikationsdaten, elektronischen Authentisierungsdaten, wie beispielsweise geheimes Schlüsselmaterial oder Passworte, und elektronischen Daten zur Signaturerstellung oder Entschlüsselung zur Verwendung in bestimmten lokalen oder entfernten Anwendungen.

Im Allgemeinen authentisiert sich ein Nutzer gegenüber dem Sicherheitsmodul mittels Nutzerauthentisierungsdaten, wie beispielsweise einem Passwort, oder auch mittels biometrischer Verfahren, und autorisiert dadurch die Verwendung weiterer elektronischer Daten in dem Sicherheitsmodul, wie beispielsweise geheimes Schlüsselmaterial zum Zweck der Authentisierung gegenüber einer Remote-Anwendung.

Implementiert ein solches Sicherheitsmodul mehrere Anwendungen werden mehrere voneinander unabhängige Nutzerauthentisierungsdaten, wie beispielsweise Passworte, verwendet. Der Nutzer ist praktisch gezwungen, sich mehrere Passworte und zugehörige Entsperrungsmerkmale zu merken. Nach einer erfolgreichen Verifikation der Nutzerauthentisierungsdaten sind alle über diese Authentisierung geschützte Daten durch den Nutzer zur Verwendung autorisiert. Eine dedizierte Freigabe einer Teilmenge von Daten ist nicht möglich.

Bisherige Verfahren, wie die "multi-Reference PIN" des deutschen HBA oder die PUK des deutschen Personalausweises berücksichtigen lediglich die Verwendung eines Nutzerauthentisierungsdatums, wie PIN- oder PUK-Verifikation, über ein und denselben Mechanismus in unterschiedlichen Applikationskontexten.

Ein PACE-Protokoll nach BSI TR-03110 V2. PACE (Password Authenticated Connection Establishment) bezeichnet ein passwortbasiertes Authentisierungs- und Schlüsseleinigungsverfahren, das beispielsweise in Identifikationsdokumenten eingesetzt wird.

Die technische Richtlinie BSI TR-03114 beschreibt technische und organisatorische Sicherheitsmaßnahmen für die zeitlich zusammenhängende Erstellung einer begrenzten Anzahl qualifizierter elektronischer Signaturen nach einer einmaligen Authentisierung des Signaturschlüssel-Inhabers gegenüber der Signaturerstellungseinheit (Heilberufsausweis-HBA) in einer gesicherten Einsatzumgebung (Stapelsignaturen).

Es ist die der Erfindung zugrundeliegende Aufgabe, eine Datenzugriffsteuerung anzugeben, die auch bei gleichem Passwort aber unterschiedlichen Verifikationsmethoden einen Zugriff auf bestimmte Daten ermöglicht.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verfahren zur Datenzugriffsteuerung in einem Sicherheitsmodul gelöst, das einen Speicher mit ersten Daten und zweiten Daten umfasst, wobei die ersten Daten und die zweiten Daten mittels desselben Passworts gesichert sind, mit den Schritten eines Auswählens einer ersten Passwortverifikationsmethode oder einer zweiten Passwortverifikationsmethode; eines Zulassens eines Zugriffs auf die ersten Daten des Sicherheitsmoduls bei einer Verifikation des Passwortes mittels der ersten Passwortverifikationsmethode; und eines Zulassens eines Zugriffs auf die zweiten Daten des Sicherheitsmoduls bei einer Verifikation des Passwortes mittels der zweiten Passwortverifikationsmethode. Dadurch wird beispielsweise der technische Vorteil erreicht, dass, obwohl ein einziges, duales Passwort verwendet wird, der Zugriff auf unterschiedliche Daten dediziert freigegeben oder gesperrt werden kann.

In einer vorteilhaften Ausführungsform des Verfahrens ist die erste und/oder zweite Passwortverifikationsmethode ein alphanumerischer Vergleich. Dadurch wird beispielsweise der technische Vorteil erreicht, dass eine einfach und mit wenigen Schritten zu implementierende Passwortverifikationsmethode verwendet wird.

In einer weiteren vorteilhaften Ausführungsform des Verfahrens umfasst die erste und/oder zweite Passwortverifikationsmethode eine kryptographische Verifikation des Passwortes mittels eines kryptografischen Schüssels. Dadurch wird beispielsweise der technische Vorteil erreicht, dass die Sicherheit des Verfahrens verbessert ist.

In einer weiteren vorteilhaften Ausführungsform des Verfahrens tauscht die erste und/oder zweite Passwortverifikationsmethode einen Sitzungsschlüssel abgeleitet aus dem Passwort aus. Dadurch wird beispielsweise der technische Vorteil erreicht, dass für jede Sitzung ein weiterer Sitzungsschlüssel generiert wird und sich die Sicherheit des Verfahrens noch weiter verbessert.

In einer weiteren vorteilhaften Ausführungsform des Verfahrens bestimmt das Sicherheitsmodul den Sitzungsschlüssel auf Basis einer Zufallszahl. Dadurch wird beispielsweise der technische Vorteil erreicht, dass der Sitzungsschlüssel auf einfache Weise erzeugt werden kann.

In einer weiteren vorteilhaften Ausführungsform des Verfahrens ist dem Passwort zumindest ein Attribut zugeordnet. Dadurch wird beispielsweise der technische Vorteil erreicht, dass das Verfahren auf Grundlage bestimmter Eigenschaften des Passwortes gesteuert werden kann.

In einer weiteren vorteilhaften Ausführungsform des Verfahrens ist das Attribut zumindest einer der Passwortverifikationsmethoden zugeordnet. Dadurch wird beispielsweise der technische Vorteil erreicht, dass je nach Passwortverifikationsverfahren unterschiedliche Eigenschaften festgelegt werden können.

In einer weiteren vorteilhaften Ausführungsform des Verfahrens ist das Attribut ein Fehlbedienungszähler für die erste oder zweite Passwortverifikationsmethode. Dadurch wird beispielsweise der technische Vorteil erreicht, dass ein unabhängiger Zähler für jede der beiden Passwortverifikationsmethoden definiert werden kann und das Sperren einer Passwortverifikationsmethode nicht automatisch zum Sperren der anderen Passwortverifikationsmethode führt.

In einer weiteren vorteilhaften Ausführungsform des Verfahrens ist das Attribut sowohl der ersten als auch der zweiten Passwortverifikationsmethode zugeordnet. Dadurch wird beispielsweise der technische Vorteil erreicht, dass die Eigenschaften in Abhängigkeit beider Passwortverifikationsmethoden festgelegt werden können.

In einer weiteren vorteilhaften Ausführungsform des Verfahrens ist das Attribut ein Passwort zum Entsperren der ersten und der zweiten Passwortverifikationsmethode. Dadurch wird beispielsweise der technische Vorteil erreicht, dass beide Passwortverifikationsmethoden auf einfache Weise durch einmalige Eingabe eines einzigen Passwortes entsperrt werden können.

In einer weiteren vorteilhaften Ausführungsform des Verfahrens ist der Zugriff auf die ersten oder die zweiten Daten ein Lesezugriff, ein Schreibzugriff, oder ein Ausführungszugriff oder eine beliebige Kombination aus diesen. Dadurch wird beispielsweise der technische Vorteil erreicht, dass unterschiedliche Zugriffsarten je nach ausgewählter Passwortverifikationsmethode ausgewählt werden können.

In einer weiteren vorteilhaften Ausführungsform des Verfahrens ist das Sicherheitsmodul eine Chipkarte oder ein Mobiltelefon. Dadurch wird beispielsweise der technische Vorteil erreicht, dass das Verfahren in einem Endgerät für einen Benutzer ausgeführt wird.

Gemäß einem zweiten Aspekt der Erfindung wird die Aufgabe durch ein Sicherheitsmodul zum Durchführen einer ersten Passwortverifikationsmethode und einer zweiten Passwortverifikationsmethode gelöst, das einen Speicher mit ersten Daten und zweiten Daten umfasst, wobei die ersten Daten und die zweiten Daten mittels desselben Passworts gesichert sind, wobei das Sicherheitsmodul eine Zugriffssteuereinrichtung zum Zulassen eines Zugriffs auf die ersten Daten des Sicherheitsmoduls bei einer Verifikation des Passwortes mittels der ersten Passwortverifikationsmethode und zum Zulassen eines Zugriffs auf die zweiten Daten des Sicherheitsmoduls bei einer Verifikation des Passwortes mittels der zweiten Passwortverifikationsmethode umfasst. Dadurch wird beispielsweise der ebenfalls technische Vorteil erreicht, dass, obwohl ein einziges, duales Passwort verwendet wird, der Zugriff auf unterschiedliche Daten dediziert freigegeben oder gesperrt werden kann.

In einer vorteilhaften Ausführungsform des Sicherheitsmoduls umfasst die Zugriffssteuereinrichtung einen Passwortspeicher zum Speichern eines Passwortes. Dadurch wird beispielsweise der technische Vorteil erreicht, dass die Zugriffseinrichtung in einfacher Weise auf das Passwort zugreifen kann.

In einer weiteren vorteilhaften Ausführungsform des Sicherheitsmoduls umfasst die Zugriffssteuereinrichtung einen Attributspeicher zum Speichern eines Attributes für das Passwort. Dadurch wird beispielsweise der technische Vorteil erreicht, dass je nach Passwortverifikationsverfahren unterschiedliche Eigenschaften festgelegt werden können.

Das Verfahren und das Sicherheitsmodul können in einem Identifikationsdokument vorgesehen sein. In diesem Zusammenhang kann das Identifikationsdokument eines der folgenden Identifikationsdokumente sein: Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Ausführungsbeispiele der Erfindung sind in den Zeichnungen dargestellt und werden im Folgenden näher beschrieben.

Es zeigen:
- Fig. 1: eine schematische Ansicht eines Sicherheitsmoduls in einer Ausführungsform;
- Fig. 2: eine schematische Ansicht eines Sicherheitsmoduls in einer weiteren Ausführungsform; und
- Fig. 3: ein Blockdiagramm des Verfahrens.

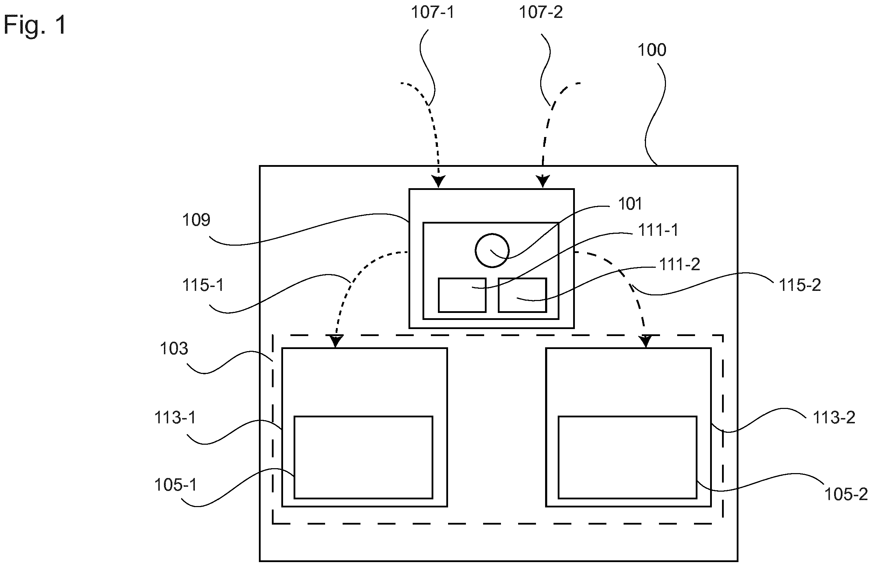

Fig. 1 zeigt eine schematische Ansicht eines Sicherheitsmoduls 100 in einer ersten Ausführungsform. Das Sicherheitsmodul ist beispielsweise ein Hardware-Sicherheitsmodul (HSM) als Peripheriegerät für die effiziente und sichere Ausführung kryptographischer Operationen oder Applikationen.

Das Sicherheitsmodul 100 umfasst eine Zugriffssteuereinrichtung 109 in der ein duales Passwort in einem nicht-flüchtigen Speicher gespeichert ist, wie beispielsweise in einem EEPROM- oder Flash-Speicher. Daneben umfasst das Sicherheitsmodul 100 einen Speicher 103, in dem eine erste Anwendung 113-1 und eine zweite Anwendung 113-2 gespeichert sind. Die erste Anwendung 113-1 weist die ersten Daten 105-1 auf und die zweite Anwendung 113-2 weist die zweiten Daten 105-2 auf. Das Sicherheitsmodul 100 ist geeignet eine erste und eine zweite Passwortverifikationsmethode 107-1 und 107-2 durchzuführen.

Die erste Passwortverifikationsmethode 107-1 ist beispielsweise eine Passwortverifikation über einen alphanumerischen Vergleich. In diesem Fall wird das übermittelte Passwort direkt mit einem gespeicherten Passwort verglichen. Im Falle einer Übereinstimmung lässt die Zugriffssteuerung 109 eine erste Autorisierung 115-1 zum Zugriff auf die ersten Daten 105-1 der ersten Anwendung 113-1 zu. Die erste Passwortverifikationsmethode 107-1 basiert beispielsweise auf einem ersten Verifikationsprotokoll.

Die zweite Passwortverifikationsmethode 107-2 ist beispielsweise eine Passwortverifikation über eine Ableitung eines kryptografischen Schlüssels und anschließendem Sitzungsschlüsselaustausch, wie beispielsweise ein PACE-Protokoll nach BSI TR-03110 V2. PACE (Password Authenticated Connection Establishment) bezeichnet ein passwortbasiertes Authentisierungs- und Schlüsseleinigungsverfahren, das beispielsweise in Identifikationsdokumenten eingesetzt wird. Im Falle einer erfolgreichen Durchführung lässt die Zugriffssteuerung 109 eine zweite Autorisierung 115-2 zum Zugriff auf die zweiten Daten 105-2 der zweiten Anwendung 113-2 zu.

Das PACE-Protokoll besteht aus vier Schritten. In einem ersten Schritt wählt ein Chip des Sicherheitsmoduls 100 eine Zufallszahl (Nonce), verschlüsselt diese mit dem Passwort als Schlüssel und sendet die verschlüsselte Zufallszahl an ein Terminal, welches die Zufallszahl wieder entschlüsselt. In einem zweiten Schritt bilden der Chip und das Terminal die Zufallszahl mithilfe einer Mapping-Funktion auf einen Erzeuger der verwendeten mathematischen Gruppe ab. In einem dritten Schritt führen der Chip und das Terminal einen Diffie-Hellman-Schlüsselaustausch durch, wobei sie den Erzeuger aus dem zweiten Schritt als Basis verwenden. In einem vierten Schritt leiten der Chip und das Terminal aus dem gemeinsamen Geheimnis Sitzungsschlüssel ab und nutzen diese für eine gegenseitige Authentisierung sowie anschließend für die Absicherung der weiteren Kommunikation.

In Abhängigkeit der gewählten Passwortverifikationsmethode 107-1 oder 107-2 wird einer externen Anwendung, wie beispielsweise dem Interface Device (IFD) oder einer Remoteanwendung wie einem Webservice, der Zugriff auf die ersten Daten 105-1 der ersten Anwendung 113-1 oder die zweiten Daten 105-2 der zweiten Anwendung 113-2 gewährt.

Ein konkretes Anwendungsbeispiel für die Funktionsweise des Sicherheitsmoduls 100 kann in einem elektronischen Personalausweis vorliegen. Der elektronische Personalausweis ist durch eine Chipkarte gebildet, die einen elektronischen Chip umfasst. Auf dem Chip ist das Sicherheitsmodul 100 gebildet.

Ein Benutzer ruft beispielsweise die Web-Seite eines Unternehmens über einen Computer auf, an den ein Chipkartenlesegerät angeschlossen ist. In das Chipkartenlesegerät ist der elektronische Personalausweis mit einem elektronischen Sicherheitsmodul 100 eingesteckt.

Der Benutzer möchte beispielsweise über die Web-Seite einen Vertrag mit dem Unternehmen abschließen.

Dazu soll in einem ersten Schritt zunächst das Alter des Benutzers festgestellt werden. Dazu wird über den Webservice das Sicherheitsmodul 100 über ein erstes Verifikationsprotokoll aufgerufen, das zur Durchführung einer ersten Passwortverifizierung 107-1 dient, wie beispielsweise das PACE Protokoll. Der Benutzer gibt dazu sein Passwort über den Computer ein. Nach erfolgreicher Verifikation des Passwortes durch das Sicherheitsmodul 100 wird der Zugriff auf die ersten Daten 105-1 zugelassen, in denen das Alter des Benutzers abgelegt ist. Ein Zugriff auf die zweiten Daten 105-2, in denen andere Merkmale gespeichert sind, wird nicht zugelassen. Die zweiten Daten 105-2 sind daher bei Verwendung der ersten Passwortverifikationsmethode 107-1 geschützt.

Nach einem erfolgreichen Altersnachweis soll beispielsweise ein Vertrag zwischen dem Unternehmen und dem Benutzer mithilfe einer elektronischen Signatur geschlossen werden. In diesem Fall wird über den Webservice das Sicherheitsmodul 100 über ein zweites Verifikationsprotokoll 107-2 aufgerufen, das zur Durchführung einer elektronischen Signatur dient. Auch in diesem Fall gibt der Benutzer sein Passwort über den Computer oder über das Kartenlesegerät ein. Das Passwort ist identisch zu dem im ersten Schritt verwendeten Passwort. Nach einer erfolgreichen Verifikation des Passwortes zum Beispiel durch einen alphanumerischen Vergleich, wird der Zugriff auf zweite Daten 105-2 zugelassen, die zur Durchführung einer elektronischen Unterschrift verwendet werden. Ein Zugriff auf die ersten Daten 105-1 wird von der Zugriffssteuerung 109 nicht zugelassen.

Da in beiden Schritten das gleiche duale Passwort verwendet wird, vereinfacht sich die Passwortverwaltung durch einen Benutzer, ohne dass Einbußen bei der Sicherheit des Sicherheitsmoduls 100 entstehen. Das duale Passwort erlaubt die Verwendung ein und desselben Passwortes in elektronischen Sicherheitsmodulen 100. Mit dem dualen Passwort verwaltet ein Nutzer lediglich ein einziges Authentisierungsdatum, wie beispielsweise ein Passwort mit zugehörigem Entsperrungsmerkmal, um damit einen Zugriff auf unterschiedliche Daten 105-1 und 105-2 des Sicherheitsmoduls 100 in Abhängigkeit der Passwortverifikationsmethode 107-1 oder 107-2 zu autorisieren. Das duale Passwort wird in einem Speicherplatz gespeichert oder durch geeignete Programmmittel wird dafür gesorgt, dass dasselbe Passwort in die jeweiligen Datenspeicher der jeweiligen Applikationen geschrieben wird.

Dem dualen Passwort 101 sind eine Menge von Attributen 111-1 und 111-2 zugeordnet. Die Attribute 111-1 und 111-2 sind zusammen mit dem Passwort 101 in dem Sicherheitsmodul 100 gespeichert. Das Attribut 111-1 gilt beispielsweise für alle Passwortverifikationsmethoden 107-1 und 107-2 gleichsam, wie beispielsweise die Passwortreferenz oder ein Entsperrungskennwort zum Entsperren von einmal blockierten Passwortverifikationsmethoden. Das Attribut 111-2 gilt demgegenüber nur für eine der Passwortverifikationsmethoden 107-1 oder 107-2, wie beispielsweise ein Fehlbedienungszähler, ein Zustand wie "authentisiert" oder "nicht-authentisiert" oder ein Lebenszyklus wie "Versiegelt", "Aktiviert", "Deaktiviert", "Geblockt", "Suspendiert".

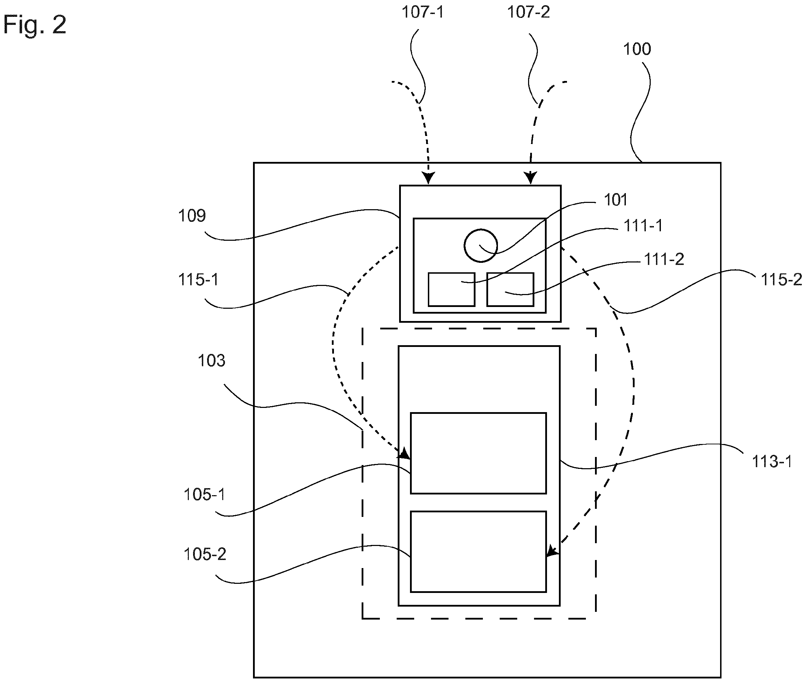

Fig. 2 zeigt eine schematische Ansicht eines Sicherheitsmoduls 100 in einer zweiten Ausführungsform. In dieser Ausführungsform erfolgt der Zugriff auf die ersten Daten 105-1 der Anwendung 113-1 bei Auswahl der ersten Passwortverifikationsmethode 107-1 und der Zugriff auf die zweiten Daten 105-2 der Anwendung 113-1 erfolgt bei Auswahl der zweiten Passwortverifikationsmethode 107-2, sofern ein gültiges Passwort eingegeben worden ist.

Ein Nutzer als Besitzer des elektronischen Sicherheitsmoduls 100 mit einer oder mehreren Anwendungen 113-1 und 113-2 verwaltet beispielsweise ein einziges Passwort 101 mit den zugehörigen Attributen 111-1 und 111-2, wie beispielsweise dem Entsperrungskennwort, um dieses für eine oder mehrere Anwendungen 113-1 und 113-2 zu verwenden. Die Auswahl der Passwortverifikationsmethode 107-1 oder 107-2 durch den Nutzer bestimmt die Autorisierung eines Zugriffs auf bestimmten Daten 105-1 oder 105-2 einer bestimmten Applikation 113-1 oder 113-2.

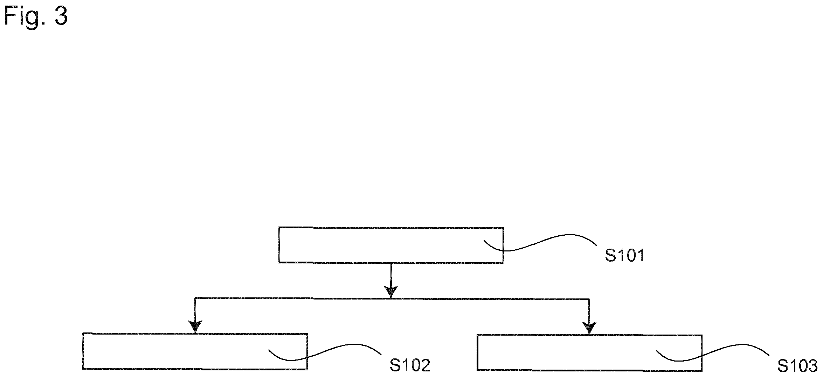

Fig. 3 zeigt ein Blockdiagramm des Verfahrens. In einem ersten Schritt S101 wird zunächst ausgewählt, ob die Passwortverifizierung nach einer ersten Passwortverifikationsmethode 107-1 oder einer zweiten Passwortverifikationsmethode 107-2 erfolgen soll. Je nachdem ob die erste Passwortverifikationsmethode 107-1 oder die zweite Passwortverifikationsmethode 107-2 ausgewählt worden ist, wird anschließend der Schritt S102 ausgeführt, bei dem ein Zugriff auf die ersten Daten 105-1 des Sicherheitsmoduls 100 zugelassen wird, wenn das Passwort mittels der ersten Passwortverifikationsmethode 107-1 verifiziert worden ist oder es wird anschließend der Schritt S103 ausgewählt, bei dem ein Zugriff auf die zweiten Daten 105-2 des Sicherheitsmoduls 100 zugelassen wird, wenn das Passwort mittels der zweiten Passwortverifikationsmethode 107-2 verifiziert worden ist.

Der Zugriff kann beispielsweise ein Lesezugriff, ein Schreibzugriff oder ein Ausführungszugriff sein. Die ersten oder zweiten Daten 105-1 und 105-2 können beispielsweise Programmdaten, Funktionsdaten oder Anwendungsdaten sein, die Befehle zur Abarbeitung und Ausführung durch einem Prozessor umfassen. Die ersten oder zweiten Daten 105-1 und 105-2 können jedoch auch nichtausführbare Daten umfassen, wie beispielsweise Textdaten oder Benutzerdaten.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Sicherheitsmodul
- 101: duales Passwort
- 103: Speicher
- 105-1: Daten
- 105-2: Daten
- 107-1: Passwortverifikationsmethode
- 107-2: Passwortverifikationsmethode
- 109: Zugriffssteuereinrichtung
- 111-1: Attribut
- 111-2: Attribut
- 113-1: Anwendung
- 113-2: Anwendung
- 115-1: Autorisierung
- 115-2: Autorisierung

## Patentansprüche

1. Verfahren zur Datenzugriffsteuerung in einem Sicherheitsmodul (100), das einen Speicher (103) mit ersten Daten (105-1) und zweiten Daten (105-2) umfasst, wobei die ersten Daten (105-1) und die zweiten Daten (105-2) mittels desselben Passworts (101) gesichert sind, mit den Schritten:
- Auswählen (S101) einer ersten Passwortverifikationsmethode (107-1) oder einer zweiten Passwortverifikationsmethode (107-2), wobei die erste oder zweite Passwortverifikationsmethode (107-1, 107-2) ein alphanumerischer Vergleich ist, oder wobei die erste oder zweite Passwortverifikationsmethode (107-1, 107-2) eine kryptographische Verifikation des Passwortes mittels eines kryptografischen Schüssels umfasst;
- Zulassen (S102) eines Zugriffs auf die ersten Daten (105-1) des Sicherheitsmoduls (100) bei einer Verifikation des Passwortes mittels der ersten Passwortverifikationsmethode (107-1); und
- Zulassen (S103) eines Zugriffs auf die zweiten Daten (105-2) des Sicherheitsmoduls (100) bei einer Verifikation des Passwortes mittels der zweiten Passwortverifikationsmethode (107-2).

2. Verfahren nach Anspruch 1, wobei die erste und/oder zweite Passwortverifikationsmethode (107-1, 107-2) einen Sitzungsschlüssel abgeleitet aus einem Passwort austauscht.

3. Verfahren nach Anspruch 2, wobei das Sicherheitsmodul (100) den Sitzungsschlüssel auf Basis einer Zufallszahl bestimmt.

4. Verfahren nach einem der vorangehenden Ansprüche, wobei dem Passwort (101) zumindest ein Attribut (111-1, 111-2) zugeordnet ist.

5. Verfahren nach Anspruch 4, wobei das Attribut zumindest einer der Passwortverifikationsmethoden (107-1, 107-2) zugeordnet ist

6. Verfahren nach Anspruch 5, wobei das Attribut ein Fehlbedienungszähler für die erste oder zweite Passwortverifikationsmethode (107-1, 107-2) ist.

7. Verfahren nach Anspruch 6, wobei das Attribut sowohl der ersten als auch der zweiten Passwortverifikationsmethode (107-1, 107-2) zugeordnet ist

8. Verfahren nach Anspruch 7, wobei das Attribut ein Passwort zum Entsperren der ersten und der zweiten Passwortverifikationsmethode ist.

9. Verfahren nach einem der vorangehenden Ansprüche, wobei der Zugriff auf die ersten oder die zweiten Daten (105-1, 105-2) ein Lesezugriff, ein Schreibzugriff, oder ein Ausführungszugriff ist

10. Verfahren nach einem der vorangehenden Ansprüche, wobei das Sicherheitsmodul (100) eine Chipkarte oder ein Mobiltelefon ist.

11. Sicherheitsmodul (100) zum Durchführen einer ersten Passwortverifikationsmethode (107-1) und einer zweiten Passwortverifikationsmethode (107-2), das einen Speicher (103) mit ersten Daten (105-1) und zweiten Daten (105-2) umfasst, wobei die ersten Daten (105-1) und die zweiten Daten (105-2) mittels desselben Passworts gesichert sind, wobei das Sicherheitsmodul (100) eine Zugriffssteuereinrichtung (109) zum Zulassen eines Zugriffs auf die ersten Daten (105-1) des Sicherheitsmoduls (100) bei einer Verifikation des Passwortes mittels der ersten Passwortverifikationsmethode (107-1) und zum Zulassen eines Zugriffs auf die zweiten Daten (105-2) des Sicherheitsmoduls (100) bei einer Verifikation des Passwortes mittels der zweiten Passwortverifikationsmethode (107-2) umfasst, wobei die erste oder zweite Passwortverifikationsmethode (107-1, 107-2) ein alphanumerischer Vergleich ist, oder wobei die erste oder zweite Passwortverifikationsmethode (107-1, 107-2) eine kryptographische Verifikation des Passwortes mittels eines kryptografischen Schüssels umfasst.

12. Sicherheitsmodul (100) nach Anspruch 11, wobei die Zugriffssteuereinrichtung (109) einen Passwortspeicher zum Speichern eines Passwortes umfasst.

13. Sicherheitsmodul (100) nach Anspruch 11 oder 12, wobei die Zugriffssteuereinrichtung (109) einen Attributspeicher zum Speichern eines oder mehrerer Attribute für das Passwort umfasst.

## Claims

1. Method for controlling access to data in a security module (100) which comprises a memory (103) containing first data (105-1) and second data (105-2), wherein the first data (105-1) and the second data (105-2) are protected by means of the same password (101), said method comprising the steps:
- selecting (S101) a first password verification method (107-1) or a second password verification method (107-2), wherein the first or second password verification method (107-1, 107-2) is an alphanumeric comparison, or wherein the first or second password verification method (107-1, 107-2) comprises a cryptographic verification of the password by means of a cryptographic key;
- permitting (S102) access to the first data (105-1) of the security module (100) upon verification of the password by means of the first password verification method (107-1); and
- permitting (S103) access to the second data (105-2) of the security module (100) upon verification of the password by means of the second password verification method (107-2).

2. Method according to claim 1, wherein the first and/or second password verification method (107-1, 107-2) exchanges a session key derived from a password.

3. Method according to claim 2, wherein the security module (100) determines the session key based on a random number.

4. Method according to one of the preceding claims, wherein at least one attribute (111-1, 111-2) is assigned to the password (101).

5. Method according to claim 4, wherein the attribute is assigned to at least one of the password verification methods (107-1, 107-2).

6. Method according to claim 5, wherein the attribute is an operating error counter for the first or second password verification method (107-1, 107-2).

7. Method according to claim 6, wherein the attribute is assigned both to the first and to the second password verification method (107-1, 107-2).

8. Method according to claim 7, wherein the attribute is a password for unlocking the first and second password verification method.

9. Method according to one of the preceding claims, wherein the access to the first or second data (105-1, 105-2) is a read access, a write access, or an execute access.

10. Method according to one of the preceding claims, wherein the security module (100) is a chip card or a mobile telephone.

11. Security module (100) for carrying out a first password verification method (107-1) and a second password verification method (107-2), which comprises a memory (103) containing first data (105-1) and second data (105-2), wherein the first data (105-1) and the second data (105-2) are protected by means of the same password, wherein the security module (100) comprises an access control means (109) for permitting access to the first data (105-1) of the security module (100) upon verification of the password by means of the first password verification method (107-1) and for permitting access to the second data (105-2) of the security module (100) upon verification of the password by means of the second password verification method (107-2), wherein the first or second password verification method (107-1, 107-2) is an alphanumeric comparison, or wherein the first or second password verification method (107-1, 107-2) comprises a cryptographic verification of the password by means of a cryptographic key.

12. Security module (100) according to claim 11, wherein the access control means (109) comprises a password memory for storing a password.

13. Security module (100) according to claim 11 or 12, wherein the access control means (109) comprises an attribute memory for storing one or more attributes for the password.

## Revendications

1. Procédé de commande d'accès à des données dans un module de sécurité (100), comprenant une mémoire (103) contenant des premières données (105-1) et des deuxièmes données (105-2), les premières données (105-1) et les deuxièmes données (105-2) étant sécurisées au moyen du même mot de passe (101), comprenant les étapes suivantes :
- sélection (S101) d'un première méthode de vérification de mot de passe (107-1) ou d'une deuxième méthode de vérification de mot de passe (107-2), où la première ou la deuxième méthode de vérification de mot de passe (107-1, 107-2) est une comparaison alphanumérique, ou où la première ou la deuxième méthode de vérification de mot de passe (107-1, 107-2) comprend une vérification cryptographique du mot de passe au moyen d'une clé cryptographique ;
- autorisation (S102) d'un accès aux premières données (105-1) du module de sécurité (100) lors d'une vérification du mot de passe au moyen de la première méthode de vérification de mot de passe (107-1) ; et
- autorisation (S103) d'un accès aux deuxièmes données (105-2) du module de sécurité (100) lors d'une vérification du mot de passe au moyen de la deuxième méthode de vérification de mot de passe (107-2).

2. Procédé selon la revendication 1, où la première et/ou la deuxième méthode de vérification de mot de passe (107-1, 107-2) échangent une clé de session dérivée d'un mot de passe.

3. Procédé selon la revendication 2, où le module de sécurité (100) détermine la clé de session sur la base d'un nombre aléatoire.

4. Procédé selon l'une des revendications précédentes, où au moins un attribut (111-1, 111-2) est associé au mot de passe (101).

5. Procédé selon la revendication 4, où l'attribut est associé à au moins une des méthodes de vérification de mot de passe (107-1, 107-2).

6. Procédé selon la revendication 5, où l'attribut est un compteur d'opérations erronées pour la première ou la deuxième méthode de vérification de mot de passe (107-1, 107-2).

7. Procédé selon la revendication 6, où l'attribut est associé à la première ainsi qu'à la deuxième méthode de vérification de mot de passe (107-1, 107-2).

8. Procédé selon la revendication 7, où l'attribut est un mot de passe pour le déverrouillage de la première et de la deuxième méthode de vérification de mot de passe.

9. Procédé selon l'une des revendications précédentes, où l'accès aux premières ou aux deuxièmes données (105-1, 105-2) est un accès en lecture, un accès en écriture ou un accès pour exécution.

10. Procédé selon l'une des revendications précédentes, où le module de sécurité (100) est une carte à puce ou un téléphone mobile.

11. Module de sécurité (100) pour l'exécution d'une première méthode de vérification de mot de passe (107-1) et d'une deuxième méthode de vérification de mot de passe (107-2), comprenant une mémoire (103) contenant des premières données (105-1) et des deuxièmes données (105-2), où les premières données (105-1) et les deuxièmes données (105-2) sont sécurisées au moyen du même mot de passe, où ledit module de sécurité (100) comprend un dispositif de commande d'accès (109) pour autoriser un accès aux premières données (105-1) du module de sécurité (100) lors d'une vérification du mot de passe au moyen de la première méthode de vérification de mot de passe (107-1) et pour autoriser un accès aux deuxièmes données (105-2) du module de sécurité (100) lors d'une vérification du mot de passe au moyen de la deuxième méthode de vérification de mot de passe (107-2), où la première ou la deuxième méthode de vérification de mot de passe (107-1, 107-2) est une comparaison alphanumérique, ou où la première ou la deuxième méthode de vérification de mot de passe (107-1, 107-2) comprend une vérification cryptographique du mot de passe au moyen d'une clé cryptographique.

12. Module de sécurité (100) selon la revendication 11, où le dispositif de commande d'accès (109) comprend une mémoire de mot de passe pour la sauvegarde d'un mot de passe.

13. Module de sécurité (100) selon la revendication 11 ou la revendication 12, où le dispositif de commande d'accès (109) comprend une mémoire d'attribut pour la sauvegarde d'un ou de plusieurs attributs pour le mot de passe.
